Europäisches Patentamt

European Patent Office

Office européen des brevets

(11) Publication number: **0 234 243**
**A1**

## (12) EUROPEAN PATENT APPLICATION

(21) Application number: **87100616.9**

(22) Date of filing: **19.01.87**

(51) Int. Cl.4: **D06F 37/26** , **B23K 26/00** , **B21D 51/18**

(30) Priority: **27.02.86 IT 4570686**

(43) Date of publication of application:
**02.09.87 Bulletin 87/36**

(84) Designated Contracting States:
**DE FR GB IT SE**

(71) Applicant: **ZELTRON ISTITUTO ZANUSSI PER L'ELETTRONICA S.P.A.**
**Via Principe di Udine, 66**
**I-33030 Campoformido Udine(IT)**

(72) Inventor: **Bacci, Dino**
**Via Montereale 10**
**I-33170 Pordenone(IT)**

(74) Representative: **Patentanwälte Grünecker, Kinkeldey, Stockmair & Partner**
**Maximilianstrasse 58**
**D-8000 München 22(DE)**

(54) Method for manufacturing a tub for a laundry washing machine.

(57) A method for manufacturing a tub of ferritic stainless steel for a laundry washing machine, comprising the steps of cutting a sheet metal blank, winding the blank and welding it to the form of a cylindrical body,, expansion-forming of the cylindrical body and applying the end walls and accessory elements to the body. The welding step is carried out by means of a laser, and prior to the expansion-forming step the cylindrical body is subjected to a heat treatment for eliminating the brittleness of the weld.

EP 0 234 243 A1

# Method for Manufacturing a Tub for a Laundry Washing Machine

The present invention relates to a method for manufacturing a tub of ferritic stainless steel for a laundry washing machine particularly of the domestic type.

The manufacture of a tub of this type normally proceeds from a planar steel sheet which is cut to size and subsequently wound on itself and welded so as to obtain a cylindrical envelope without end walls.

The thus obtained cylindrical body is mounted in an expansion forming machine operable to form the cylindrical body to the required shape for subsequent processing steps substantially consisting in applying the end walls and accessory elements for mounting the functional components of the washing machine, such as motor supports, bearings for the shaft of the drum, brackets for anchoring suspension elements and the like.

Taking into account the different types of steel which may be employed for this purpose, the most critical operation during the manufacture of such a tub is the welding operation in context with the subsequent expansion-forming step.

Heretofore the welding step has usually been carried out by resistance welding employing rollers engaging superimposed rim portions of the metal sheet, and the material employed is stabilized stainless steel.

This manufacturing method is technically and economically onerous due to the necessity of employing a special material and highly complex equipment.

On the other hand it is known that from the beginning of its development the laser has shown its capability of being employed in the field of welding techniques. The applications of the laser welding technique have considerably increased with the introduction of the $CO_2$ laser in about 1970 (Laser Welding -Journal of Metals, July 1982).

The laser welding technique presents many potentially advantageous characteristics such as an increased working speed and concentration of the heating effect in the welding zone.

These characteristics are of particular interest for certain applications, for instance for welding or soldering electronic components to a printed circuit, but result in certain disadvantages in other cases.

When for instance employing ferritic stainless steels (e.g. AISI 400 series), the laser welding technique results in excessive brittleness of the weld which may prejudice the behaviour of the welded product when subsequently subjected to mechanical loads during further processing or in operation.

It is an object of the invention to render the manufacture of tubs for laundry washing machines more rational and economical by the use of a ferritic stainless steel and the employ of a laser welding system in avoidance of the above discussed shortcomings.

The invention thus provides a method for manufacturing a tub of ferritic stainless steel for a laundry washing machine, comprising the steps of cutting a sheet metal blank, winding the blank and welding it to form a cylindrical body, expansion-forming of the cylindrical body, and applying end walls and accessory elements thereto, said method being characterized in that said welding step is carried out by means of a laser and that, prior to said expansion-forming step said cylindrical body is subjected to a heat treatment for eliminating the brittleness of the weld.

The characteristics of the invention will become more clearly evident from the following detailed description given by way of non-limitative example.

The material proposed for use in the manufacture of tubs for washing machines is ferritic stainless steel AISI 430 readily available in the trade in the form of coils or sheets having a thickness of less than one millimeter.

The first manufacturing step is wholly conventional and consists in cutting the metal sheet to size so as to obtain a planar blank of suitable dimensions and shape in view of the characteristics (particularly the volume) of the tub to be manufactured.

The subsequent manufacturing step consists in calendering the blank for shaping the sheet to a cylindrical configuration, followed by welding the thus formed cylindrical body. According to the invention this welding step is carried out with the aid of a laser, particularly a $CO_2$ laser.

The welding process is preferably carried out from one end along a generatrix of the cylindrical body, with the heat supplied for the welding process being concentrated in an extremely narrow zone.

This results in the formation of a fused weld band the hardness of which may attain up to 390 HV (Vickers Hardness), that is, a value nearly double that of the original steel. This weld band is therefore extremely brittle in comparison to the remainder of the cylindrical body.

This brittleness represents an obstacle for the subsequent manufacturing step of expansion-forming, during which the cylindrical body is subjected to considerable mechanical stress for obtaining the desired shape of the tub.

This shortcoming may even be intensified by possible discontinuities in the sheet metal and by marginal incisions adjacent the weld, or even by defective alignment of the rims of the sheet.

It is also to be remembered that during operation of a laundry washing machine the tub is subjected to dynamic loads in view of the fact that it supports the drum containing the laundry and rotated at low speed with frequent inversion of the rotation during the laundering operation, and at high speed during the spin-drying step.

For this reason, the invention provides that prior to passing on to the expansion-forming step, the weld band of the cylindrical body is subjected to a heat treatment for eliminating its brittleness.

This heat treatment may be carried out by means of any known heat source, for instance by means of an oxy-acetylene torch. Preferably the treatment is carried out by induction heating to a temperature of no more than 800 °C at a rate of about 1 m/min.

In this manner the treatment may be carried out with the aid of a protecting gas for preventing any superficial oxidation of the metal sheet. The parameters of the heat treatment vary of course with the type of steel employed, the thickness of the sheet, the operating conditions and the desired final result.

In any case the laser welding technique results in many advantages such as a considerable reduction of the welding time,, operation under atmospheric conditions, the elimination of electrodes or other welding materials, and an improved accuracy of the weld band.

The subsequent heat treatment for eliminating the brittleness of the weld permits the employ of ferritic stainless steels and reduces the necessity of inspections during the overall manufacturing cycle.

The manufacture of tubs for laundry washing machines is thus rendered more rational and economical, considerably reducing the percentage of defective products. The remaining manufacturing steps after the welding and heat treatment steps are the traditional ones of expansion-forming and applying the required components for completing the tub.

## Claims

1. A method for manufacturing a tub of ferritic stainless steel for a laundry washing machine, comprising the steps of cutting a sheet metal, winding the sheet and welding it to form a cylindrical body, expansion-forming of the cylindrical body and applying end walls and accessory elements thereto, characterized in that said welding step is carried out by means of a laser and that, prior to the expansion-forming step said cylindrical body is subjected to a heat treatment for eliminating the brittleness of the weld.

2. A method according to claim 1, characterized in that said welding step is carried out using a $CO_2$ laser, and the steel employed is of the type ASI series 400, preferably AISI 430, having a thickness of less than 1 mm.

3. A method according to claim 1, characterized in that said heat treatment succeeding said welding step is carried out with per se known heating methods, preferably by induction-heating, at a temperature of no more than 800 °C and at a rate of about 1 m/min.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | NL-A-7 807 744  (OFFICINE MONFALCONESI E. PASSERO & C.S.R.L.)<br>* Page  1, line 1 - page 2, line 9; page 4, line 27 - page 5, line 19; figures 4-10 *<br>--- | 1 | D 06 F   37/26<br>B 23 K   26/00<br>B 21 D   51/18 |
| Y | DE-A-2 628 687  (F.M.C. CORP.)<br>* Claims 1,6,9; page 6, last paragraph - page 7, first paragraph; page 11, line 4 - page  13;  figures 5,10 * | 1 | |
| A | | 2 | |
| | --- | | |
| A | US-A-4 402 769  (J.M. BEIGAY)<br>* Whole document *<br>--- | 2,3 | TECHNICAL FIELDS SEARCHED (Int. Cl.4) |
| A | GB-A-2 010 926  (INDUSTRIE A. ZANUSSI)<br>* Whole document *<br>--- | 1,3 | D 06 F<br>B 23 K<br>B 21 D<br>C 21 D |
| A | PATENT ABSTRACTS OF JAPAN, vol. 7, no. 92 (M-208)[1237], 16th April 1983; & JP-A-58 16 781 (SUMITOMO KINZOKU KOGYO K.K.) 31-01-1983<br>* Whole document *<br>----- | 1,3 | |

The present search report has been drawn up for all claims

| Place of search | Date of completion of the search | Examiner |
|---|---|---|
| THE  HAGUE | 04-06-1987 | ARAN D.D. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO Form 1503 03 82